# EUROPÄISCHE PATENTANMELDUNG

(11) **EP 4 350 916 A1**
(43) Veröffentlichungstag der Anmeldung: **10.04.2024**
(21) Anmeldenummer: 22315231.5
(22) Anmeldetag: 05.10.2022
(51) Int. Cl.: H02G 3/22, F16L 5/04, F16L 5/10, A62C 3/16

(54) **FLAMMENDICHTE KABELDURCHFÜHRUNG, CONTAINER UND SCHIENENFAHRZEUG MIT EINER FLAMMENDICHTEN KABELDURCHFÜHRUNG, SOWIE VERWENDUNG EINER SCHAUMSTOFFDICHTUNG**

(71) Anmelder: ALSTOM Holdings, 93400 Saint-Ouen-sur-Seine (FR)
(72) Erfinder: Heidrich, Peter, 67067 Ludwigshafen (DE); Rathmann, Detlev, 26419 Schortens (DE)
(74) Vertreter: Alatis

(57) **Zusammenfassung**

Eine flammendichte Kabeldurchführung (100) umfasst eine Buchse (110) mit einer Durchgangsöffnung (113) zum Führen von mindestens einem Kabel (300) durch eine Trennwand (200), und eine Schaumstoffdichtung (120) aus einem Schaumstoff zum Einsetzen in die Durchgangsöffnung (113) der Buchse (110) und zum Umschließen des mindestens einen Kabels (300). Die Schaumstoffdichtung (120) weist mindestens zwei konzentrisch angeordnete und voneinander zum stufenweisen Anpassen des lichten Innendurchmessers der Schaumstoffdichtung (120) lösbare Schaumstoffringe (121, 122, 123) auf, wobei der Schaumstoff der Baustoffklasse B1 oder B2 gemäß DIN 4102:1998 entspricht und unter thermischer Einwirkung, insbesondere bei einem Brandfall, aufschäumt.

## Beschreibung

### TECHNISCHES GEBIET

Die Offenbarung liegt auf dem Gebiet der Schienenfahrzeugtechnik und betrifft eine flammendichte Kabeldurchführung, ein Container mit einer flammendichten Kabeldurchführung, ein Schienenfahrzeug mit einer flammendichten Kabeldurchführung sowie die Verwendung einer Schaumstoffdichtung für eine flammendichte Kabeldurchführung.

Es ist bekannt, dass beispielsweise Einbauräume oder Container bei Schienenfahrzeugen über elektrische Leitungen verbunden werden.

Beispielsweise werden diese elektrischen Leitungen innerhalb einer Kabeldurchführung in Form von Kabelschutzschläuchen und deren Verschraubungen geführt. Nach den gültigen Brandschutznormen, beispielsweise der Norm DIN EN 45545, muss ein Hersteller eines Schienenfahrzeugs für entsprechende Kabeldurchführungen nachweisen, dass diese z.B. rauchgasdicht und/oder flammendicht sind.

Dabei ist eine Dichtheit gegenüber Rauchgas mit einem größeren Aufwand als bei einer Dichtheit gegenüber Flammen verbunden.

Es ist auch bekannt, dass Schienenfahrzeuge innerhalb ihrer Lebensdauer konstruktive Änderungen erfahren, die mit einer Demontage von Kabeldurchführungen verbunden sein können.

Es sind zerstörungsfrei lösbare Kabeldurchführungen bekannt. Diese können rauchgasdicht sein, bieten jedoch kaum eine Flexibilität bei Erweiterungen und sind relativ teuer und komplex.

Für Kabeldurchführungen, die gegenüber Flammen dicht sein sollen, aber nicht notwendigerweise gegen Rauchgas, werden in der Praxis Kabeldurchführungen verwendet, die nicht rauchgasdicht sind, da hiermit auch eine Flammendichtheit oftmals gewährleistet ist. Diese Kabeldurchführungen werden beispielsweise nach dem Einbau in das Schienenfahrzeug mit geeigneten pastösen Flammschutzmitteln verfüllt, sodass der Anforderung der Dichtheit gegenüber Flammen Rechnung getragen wird.

Durchführungen für Kabel oder Rohrleitungen, welche eine Dichtfunktion, beispielsweise gegen Gas, Rauch oder Flammen aufweisen, sind beispielsweise in CN 2 10 669 367 U, CN 2 09 692 322 U, CN 1 10474 282 B, KR 10 2019 0 034 712 A, EP 3 448 651 B1, WO 2016 / 104 20 A1, EP 2 722 572 B1, EP 2 131 085 B1, RU 2 301096 C1, EP 1 631 358 B1, US 2002 / 0030326 A1, US 5 634 304 A und EP 0 281 353 A2 beschrieben.

Nachteilig an diesen Lösungen ist, dass diese Kabeldurchführungen bei anstehenden konstruktiven Änderungen nicht mehr zerstörungsfrei oder nur mit erheblichem Aufwand gelöst werden können, oder konstruktiv aufwendig sind. Es ergeben sich ein erhöhter Aufwand sowie erhöhte Kosten, dadurch, dass die Kabeldurchführungen nach der Demontage oftmals nicht mehr nutzbar sind.

Es ist daher Aufgabe der vorliegenden Erfindung, eine ausreichend flammendichte Kabeldurchführung bereitzustellen, die günstig in ihrer Herstellung ist. Weiterhin soll ein Schienenfahrzeug mit einer solchen problemlösenden Kabeldurchführung dargestellt werden.

### ERFINDUNGSGEMÄSSE LÖSUNG

Diese Aufgabe wird durch eine flammendichte Kabeldurchführung nach Anspruch 1, durch einen Container mit einer solchen flammendichten Kabeldurchführung nach Anspruch 10, durch ein Schienenfahrzeug mit einer solchen flammendichten Kabeldurchführung nach Anspruch 11, und der Verwendung einer Schaumstoffdichtung für eine flammendichte Kabeldurchführung nach Anspruch 12 gelöst. Weitere Ausführungsformen, Ausgestaltungen und Vorteile ergeben sich aus den abhängigen Ansprüchen und der nachfolgenden Beschreibung.

Gemäß einem Aspekt der vorliegenden Erfindung wird eine flammendichte Kabeldurchführung bereitgestellt, wobei die flammendichte Kabeldurchführung dazu dient, mindestens ein Kabel durch eine Trennwand zu führen. Die flammendichte Kabeldurchführung umfasst eine Buchse mit einer Durchgangsöffnung und eine Schaumstoffdichtung aus einem Schaumstoff zum Einsetzen in die Durchgangsöffnung der Buchse und zum Umschließen des mindestens einen Kabels, wobei die Schaumstoffdichtung mindestens zwei, insbesondere mindestens drei, bevorzugt mindestens vier, besonders bevorzugt mindestens fünf, konzentrisch angeordnete, und voneinander lösbare Schaumstoffringe aufweist. Die Schaumstoffringe können derart voneinander gelöst werden, dass ein stufenweises Anpassen des lichten Innendurchmessers der Schaumstoffdichtung ermöglicht wird. Es wird insbesondere ein Schaumstoff aus einem Material verwendet, welches den Anforderungen der Baustoffklasse B1 oder B2 gemäß DIN 4102:1998 entspricht, und unter thermischer Einwirkung, insbesondere bei einem Brandfall, weiter aufschäumt. Das Material des Schaumstoffs ist somit ein intumeszierendes Material.

Die Schaumstoffdichtung ist ein Formteil, d.h. die Schaumstoffdichtung hat eine vorgegebene Form, ist formstabil, jedoch elastisch verformbar. Die Schaumstoffdichtung ist von geschäumten Materialien zu unterscheiden, welche beispielsweise am Einbauort aus einer Tube gedrückt werden und dabei aufschäumen und Hohlräume ausfüllen. Derartige geschäumte Materialien stellen keine Formteile. Im Gegensatz zu geschäumten Materialien lassen sich Formteile leichter handhaben und schneller und zuverlässiger in Buchse der Kabeldurchführung einsetzen.

Die flammendichte Kabeldurchführung muss nicht notwendigerweise rauchgasdicht nach EN45545-3 sein. Es genügt für viele Anwendungen, dass die Kabeldurchführung flammendicht gemäß EN45545-2 ist. Damit ist es möglich, geeignete Schaumstoffe zu verwenden. Auf teure und aufwendig zu installierende rauchgasdichte Materialien kann verzichtet werden. Dadurch werden nicht nur Kosten gespart, sondern auch der Montageaufwand verringert.

Die Buchse kann dabei einen Außendurchmesser aufweisen, der im Wesentlichen dem Durchmesser einer Bohrung beziehungsweise eines Durchbruchs durch die Trennwand entspricht. Im Wesentlichen bedeutet hierbei, dass auch entsprechende Passungen vorgesehen werden können, um beispielsweise die Buchse mit Hilfe einer Presspassung ohne weitere Befestigungsmittel in der Bohrung in der Trennwand zu fixieren.

Die Buchse kann gemäß einigen Ausführungsformen beispielsweise auch einen Absatz an ihrem Außenumfang aufweisen, der an einer ersten Seite der Trennwand anliegt, wenn die Kabeldurchführung in die Trennwand eingesetzt wird. An einer zweiten Seite der Trennwand kann beispielsweise ein Befestigungsmittel vorgesehen sein, um die Buchse fest mit der Trennwand zu verbinden. Insbesondere kann die Buchse dafür ein Außengewinde aufweisen, um die Buchse mit einer Mutter an der Trennwand zu befestigen. Beispielsweise kann die Buchse gemäß einer weiteren Ausführungsform mindestens eine Nut zur Fassung eines ersten Sicherungsringes aufweisen. Die Buchse kann durch den ersten Sicherungsring in der Bohrung in der Trennwand fixiert werden.

Die Buchse kann gemäß einigen Ausführungsformen einseitig oder beidseitig bündig mit der Trennwand abschließen.

Die Schaumstoffdichtung kann in die Durchgangsöffnung der Buchse einlegbar sein. Die Durchgangsöffnung kann gemäß einigen Ausführungsformen durchgängig (mit konstantem Innendurchmesser) ausgestaltet sein, gemäß weiteren Ausführungsformen kann an einem Innenumfang mit Innendurchmesser ID beispielsweise ein Absatz vorhanden sein, der als Anschlag für die Schaumstoffdichtung dienen kann. Gemäß einigen Ausführungsformen kann die Buchse an dem Innenumfang mindestens eine Nut zur Fassung eines zweiten Sicherungsringes aufweisen. Die Schaumstoffdichtung kann durch den zweiten Sicherungsring innerhalb der Buchse fixierbar sein.

Der Schaumstoff hat typischerweise eine Vielzahl von geschlossenen Poren, wodurch der Schaumstoff eine elastische Nachgiebigkeit aufweist.

Gemäß einiger Ausführungsformen kann die Schaumstoffdichtung an dem äußersten Schaumstoffring einen Außendurchmesser dn größer als der Innendurchmesser ID der Buchse aufweisen, sodass die Schaumstoffdichtung unter leichter Kompression in die Durchgangsöffnung einsetzbar sein kann. Diese Ausführungsform bietet den Vorteil, dass die Schaumstoffdichtung reibschlüssig und ohne weitere Befestigungsmittel in der Durchgangsöffnung der Buchse fixiert bleibt. Beispielsweise kann der äußerste Schaumstoffring an der Durchgangsöffnung mit der Buchse verklebt werden.

Der Schaumstoff der Schaumstoffdichtung entspricht beispielsweise der Baustoffklasse B1 oder B2 gemäß DIN 4102:1998 und kann weiterhin die Eigenschaft aufweisen, unter thermischer Einwirkung, insbesondere bei einem Brandfall, derart aufzuschäumen, dass die Kabeldurchführung einen Flammendurchschlag verhindert.

Es ist nicht notwendigerweise erforderlich, das mindestens eine Kabel davor zu schützen, selbst Feuer zu fangen, wenn es unter thermischer Einwirkung steht. Weiterhin befasst sich die vorliegende Erfindung nicht damit, die höhere Anforderung der Dichtheit gegenüber Rauchgas zu erfüllen. Eine Dichtheit gegenüber Rauchgas muss durch die vorliegende Erfindung ausdrücklich nicht notwendigerweise gewährleistet werden. Vielmehr befasst sich die vorliegende Erfindung damit, dass eine Flamme auf der ersten Seite der Trennwand nicht durch die flammenfeste Kabeldurchführung auf die zweite Seite der Trennwand überschlagen kann. Die Kabeldurchführung muss daher nicht rauchgasdicht sein.

Die konzentrisch angeordneten Schaumstoffringe können gemäß einigen Ausführungsformen in ihrem Durchmesser derart gewählt werden, dass sie Standard-Kabeldurchmessern und/oder Standard-Kabelbunddurchmessern entsprechen. In Abhängigkeit eines Durchmessers eines durchzuführenden Kabels oder eines durchzuführenden Kabelbunds kann bei der Montage beispielsweise mindestens ein oder kein innerer Schaumstoffring entnommen werden. Dadurch kann ein stufenweises Anpassen eines lichten Innendurchmessers der Schaumstoffdichtung ermöglicht werden. Weiterhin wird eine nachträgliche Erweiterung, d.h. das Einlegen weiterer Kabel und/oder Kabelbunde durch die bereits montierte flammendichte Kabeldurchführung, ermöglicht. Beispielsweise wird mindestens ein Schaumstoffring entnommen.

Die Durchmesser können gemäß einigen Ausführungsformen auch derart gewählt werden, dass die Schaumstoffdichtung bei einem Einlegen oder einem Einschieben von dem mindestens einen Kabel leicht komprimiert wird. So wird erreicht, dass keine Hohlräume entstehen können, die einen Flammenüberschlag begünstigen könnten. Im Brandfall schäumt unter Temperatureinfluss (Hitze des Feuers) der Schaumstoff weiter auf und dehnt sich auf den gesamten zur Verfügung stehenden Raum aus, wodurch der Schutz gegen einen Flammenüberschlag weiter verbessert wird. Nach einem Brandfall wird die Kabeldurchführung, d.h. insbesondere die Schaumstoffdichtung und die Buchse, ggf. auch das Kabel getauscht.

Ein seitliches Einlegen des mindestens einen Kabels kann gemäß einiger Ausführungsformen ermöglicht werden, indem die Schaumstoffringe jeweils einen Längsschlitz aufweisen. Gemäß einiger Ausführungsformen sind die Längsschlitze in Umfangsrichtung versetzt angeordnet. Der Schaumstoffring kann entlang des Längsschlitzes aufgetrennt werden, sodass das mindestens ein Kabel eingelegt werden kann.

Die konzentrischen Ringe können bei Bedarf in Längsrichtung geschlitzt sein/werden, wodurch auch eine nachträgliche Montage möglich ist. Hierbei ist darauf zu achten, dass bei der Montage nicht Schlitz über Schlitz liegt. Wenn die einzelnen Ringe so angeordnet werden, dass deren Längsschlitze in Umfangsrichtung zueinander versetzt sind, ist dies für das Verhindern eines Flammdurchschlags im Brandfall von Vorteil. Sollen später einmal Leitungen nachgezogen werden, kann durch Entfernung entsprechender Ringelemente Platz geschaffen werden. Die Längsschlitze sind bevorzugt durchgehend, sowohl in Längsrichtung (parallel zur Achse der Ringe) als auch in Dickenrichtung (Radialrichtung) der Ringe.

Gemäß einiger Ausführungsformen können auch die nicht komprimierten Schaumstoffringe ein Übermaß in ihrem Außendurchmesser gegenüber dem Innendurchmesser des nächst größeren Schaumstoffringes aufweisen. Bei einigen Ausführungsformen können die Schaumstoffringe untereinander, insbesondere nach dem Einlegen oder Einschieben des mindestens einen Kabels, verklebt sein. Damit wird beispielsweise erreicht, dass sich einzelne Schaumstoffringe nicht mehr lösen können, so dass eine Funktionsfähigkeit der flammendichten Kabeldurchführung jederzeit gewährleistet bleibt.

Gemäß einiger Ausführungsformen kann die flammendichte Kabeldurchführung weiterhin einen mit einem Stirnende der Buchse verbindbaren Kabelschutzschlauch aufweisen, um das mindestens eine Kabel von der Buchse lose weiterzuführen. Der Kabelschutzschlauch kann beispielsweise weiterhin einen Schlauch und einen Befestigungsring aufweisen. Der Schlauch kann dabei mit dem Befestigungsring verbunden sein. Der Befestigungsring kann dazu dienen, den Kabelschutzschlauch an der Buchse zerstörungsfrei lösbar zu verbinden.

Die vorliegende Erfindung ermöglicht erstmals eine zerstörungsfreie Demontage der flammendichten Kabeldurchführung bei gleichzeitig weniger komplexem Aufbau als vorhandene Kabeldurchführungen aus dem Stand der Technik, die der Anforderung der Rauchgasdichtheit genügen. Dadurch können Kosten bei der Anschaffung und bei konstruktiven Änderungen, die eine Demontage der Kabeldurchführung erfordern, eingespart werden.

Gemäß einem weiteren Aspekt der Offenbarung wird ein Container bzw. ein Schienenfahrzeug mit einer flammendichten Kabeldurchführung gemäß einer oder einer Kombination der voran beschriebenen Ausführungsformen offenbart.

Als Schienenfahrzeuge werden insbesondere Züge, U-Bahnen, Metros, Straßenbahnen, Hochgeschwindigkeitszüge oder ähnliche angesehen. Die Kabeldurchführung ist insbesondere in eine Durchgangsöffnung einer Trennwand, z.B. Gehäusewand, eines Containers bzw. eines Einbauraums eingesetzt. Bevorzugt ist der Container bzw. der Einbauraum außerhalb des Wagenkastens bzw. des Passagierbereichs des Schienenfahrzeugs angeordnet, z.B. unterhalb des Wagenkastens oder oberhalb des Wagenkastens auf dem Dach des Schienenfahrzeugs. Das Schienenfahrzeug weist daher insbesondere einen Wagenkasten mit einem Passagierbereich und einen Einbauraum bzw. einen Container auf, der außerhalb am Wagenkasten befestigt ist. Bei Verwendung der hier beschriebenen flammendichte Kabeldurchführung kann in einfacher, kostengünstiger und vorteilhafter Weise ein gemäß EN45545-2 geforderter Schutz vor einem potentiellen Übergriff von Flammen erreicht werden.

Gemäß einem weiteren Aspekt wird die Verwendung einer Schaumstoffdichtung aus einem Schaumstoff der Baustoffklasse B1 oder B2 gemäß DIN 4102:1998 zum Einsetzen in eine Durchgangsöffnung einer Buchse und zum Umschließen und Führen mindestens eines Kabels durch eine Trennwand offenbart, sodass eine flammendichte Kabeldurchführung ermöglicht wird. Dabei weist die Schaumstoffdichtung mindestens zwei voneinander zum stufenweisen Anpassen des lichten Innendurchmessers der Schaumstoffdichtung lösbare Schaumstoffringe auf. Der Schaumstoff weist weiterhin die Eigenschaft auf, unter thermischer Einwirkung, insbesondere bei einem Brandfall, aufzuschäumen.

Die Schaumstoffringe haben unterschiedliche Innen- und Außendurchmesser und sind bevorzugt koaxial zueinander angeordnet, wobei die Schaumstoffringe mit größerem Außendurchmesser den Schaumstoffring mit dem nächstkleineren Außendurchmesser umgreifen. Jeder Schaumstoffring kann einen in Axialrichtung verlaufenden Längsschlitz aufweisen, um den Schaumstoffring zu öffnen und das oder die Kabel einlegen zu können. Die Schaumstoffringe sind bevorzugt so angeordnet, dass die Längsschlitze der einzelnen Schaumstoffringe in Umfangsrichtung zueinander versetzt sind. Beispielsweise können die Längsschlitze von benachbarten Schaumstoffringe um mindestens 30°, bevorzugt um mindestens 45°, und noch weiter bevorzugt um mindestens 60° zueinander versetzt sein.

Die vorstehend beschriebenen Ausführungsformen können beliebig, jedoch in sinnhafter Weise miteinander kombiniert werden, insbesondere kann die beschriebene flammendichte Kabeldurchführung bei einem Schienenfahrzeug zum Durchführen von mindestens einem Kabel durch eine Trennwand eines Einbauraums oder eines Containers verwendet werden.

### KURZBESCHREIBUNG DER FIGUREN

Nachfolgend wird die Erfindung anhand von Ausführungsformen näher erläutert, ohne dass diese den durch die Schutzansprüche definierten Schutzbereich einschränken sollen.

Die beiliegenden Zeichnungen veranschaulichen Ausführungsformen und dienen zusammen mit der Beschreibung der Erläuterung der Prinzipien der Erfindung. Die Elemente der Zeichnungen sind relativ zueinander und nicht notwendigerweise maßstabsgetreu. Gleiche Bezugszeichen bezeichnen ähnliche Teile.
Figur 1 zeigt eine flammendichte Kabeldurchführung gemäß einer Ausführungsformen in einer Schnittansicht.
Figur 2 zeigt eine Kabeldurchführung gemäß einer weiteren Ausführungsformen in einer Schnittansicht.
Figur 3 zeigt Schaumstoffringe gemäß einiger Ausführungsformen in einer Stirnseitenansicht.

### AUSFÜHRUNGSBEISPIELE

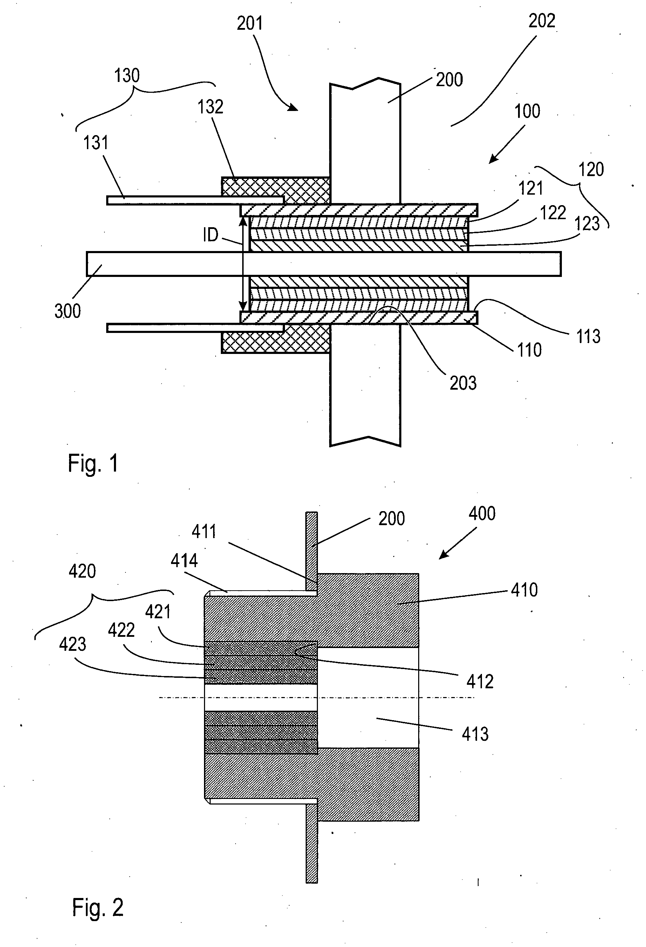

In Figur 1 ist eine flammendichte Kabeldurchführung 100 mit einer Buchse 110 gemäß einiger Ausführungsformen dargestellt. Die Buchse 110 kann in eine Durchgangsöffnung 203 in einer Trennwand 200 und durch die Trennwand 200 hindurch von einer ersten Seite 201 der Trennwand 200 her eingeführt sein. Die Buchse 110 durchsetzt die Trennwand 200 vollständig und ragt beispielsweise, jedoch nicht notwendigerweise, über eine zweite Seite 202 der Trennwand 200 hinaus. Die Buchse 110 kann dabei gemäß einiger Ausführungsformen eine Passung zu der Durchgangsöffnung 203, die beispielsweise in Form einer Bohrung 203 (in Figur 1 gezeigt) oder eines Durchbruch (nicht gezeigt) durch die Trennwand 200 ausgeführt ist, aufweisen. Insbesondere kann eine Presspassung vorgesehen werden, sodass die Buchse 110 ohne weitere Befestigungsmittel in der Bohrung 203 fixierbar ist. Die Buchse 110 kann eine Länge aufweisen, die mindestens der Dicke der Trennwand 200 entspricht. Insbesondere kann die Buchse 110 eine Länge aufweisen, welche größer ist als die Dicke der Trennwand 200. Denkbar ist es auch, dass die Buchse 110 eine kürzere Länge als die Trennwand 200 aufweist. Typischerweise ragt die Buchse 110 beidseitig über die beiden Seiten 201, 202 der Trennwand 200 hinaus und hat daher eine Länge, welche größer ist als die Dicke der Trennwand 200.

Die Buchse 110 kann gemäß zusätzlicher oder alternativer Ausführungsformen außen mindestens eine umlaufende Nut aufweisen, die zur Positionierung mindestens eines Sicherungsrings genutzt werden kann, sodass die Buchse 110 innerhalb der Bohrung 203 zerstörungsfrei demontierbar fixiert ist. Gemäß einiger Ausführungsformen weist die Buchse 110 einen Absatz an ihrem Außenumfang auf, sodass die Position der Buchse 110 an der Trennwand 200 in eine Richtung fixiert wird. Dies ist weiter unten näher in Figur 2 gezeigt.

In einer Durchgangsöffnung 113 der Buchse 110 können mindestens zwei, insbesondere mindestens drei, Schaumstoffringe 121, 122, 123 angeordnet sein, die eine Schaumstoffdichtung 120 bilden. Die Schaumstoffdichtung 120 kann eine kürzere Länge aufweisen als die Buchse 110 und zentriert oder nicht zentriert innerhalb der Durchgangsöffnung 113 der Buchse 110 positioniert sein. Insbesondere kann die Schaumstoffdichtung 120 im Wesentlichen die gleiche Länge aufweisen wie die Buchse 110. Die Schaumstoffdichtung 120, aufweisend einen Außendurchmesser dn des äußersten Schaumstoffrings 121, kann beispielsweise unter Kompression in die Durchgangsöffnung 113 der Buchse 110, aufweisend z.B. einen Innendurchmesser ID kleiner als der Außendurchmesser des äußersten unkomprimierten Schaumstoffrings dn, eingebaut werden. Dadurch wird erreicht, dass die Schaumstoffdichtung 120 reibschlüssig und ohne die Notwendigkeit von zusätzlichen Befestigungsmitteln innerhalb der Buchse 110 hinreichend fixiert werden kann. Die Anzahl der notwendigen Schaumstoffringe ergibt sich aus dem Innendurchmesser ID der Buchse (110), der Wandstärke der einzelnen Schaumstoffringe, und der Gesamtdicke der durchzuführenden Kabel 300. Die einzelnen Schaumstoffringe können dabei eine einheitliche Wandstärke aufweisen, oder auch jeweils eine andere Wandstärke haben.

Die in Figur 1 gezeigte Ausführungsform weist eine Durchgangsöffnung 113 der Buchs 110 mit durchgängig konstantem Innendurchmesser auf.

Die Schaumstoffdichtung 120 kann zusätzlich oder alternativ gemäß einiger Ausführungsformen mit Befestigungsmitteln innerhalb der Buchse 110 gehalten werden können. Beispielsweise kann mindestens ein Anschlag innerhalb der Durchgangsöffnung 113 der Buchse 110 vorgesehen sein, d.h. an einem Innenumfang der Durchgangsöffnung 113 mit Innendurchmesser ID kann ein Absatz vorhanden sein, der als Anschlag für die Schaumstoffdichtung 120 dient. Dies ist, weiter unten, näher in Figur 2 gezeigt.

Die Schaumstoffdichtung 120 kann beispielsweise in komprimiertem Zustand eingebaut werden und kann innerhalb der Durchgangsöffnung 113 der Buchse 110 sowohl reibschlüssig als auch durch ein- oder beidseitige Anschläge axial unverschieblich fixiert sein. Der mindestens eine Anschlag kann an den jeweiligen Enden der Buchse 110 vorgesehen werden und/oder innerhalb der Durchgangsöffnung 113. Denkbar ist es gemäß alternativer oder zusätzlicher Ausführungsformen auch, die Schaumstoffdichtung 120 innerhalb der Durchgangsöffnung 113 durch Sicherungsringe zu sichern. Dazu kann innerhalb der Buchse 110 mindestens eine umlaufende Nut vorgesehen sein.

Gemäß einiger Ausführungsformen kann der äußerste Schaumstoffring 121 innerhalb der Durchgangsöffnung 113 der Buchse 110 mit der Buchse 110 verklebt sein, sodass die Schaumstoffdichtung 120 innerhalb der Durchgangsöffnung 113 fixiert ist. Weiterhin oder alternativ können auch die Schaumstoffringe 121, 122, 123 untereinander verklebt sein. Im Falle einer konstruktiven Änderung, bei der auch die flammendichte Kabeldurchführung 100 oder wenigstens die Schaumstoffdichtung 120 demontiert werden muss, kann die verklebte Schaumstoffdichtung 120 zerstörend'demontiert werden und muss bei einem erneuten Einbau möglicherweise ersetzt werden. Es ist jedoch auch möglich, die Buchse 110 in der Trennwand zu belassen und lediglich die Schaumstoffdichtung 120 auszutauschen, wenn beispielsweise ein Kabel getauscht wird.

Der Ausbau und Einbau sowie auch der Aufbau der gesamten flammendichten Kabeldurchführung 100 kann durch die Verklebung der Schaumstoffdichtung 120 mit der Buchse 110 vereinfacht sein und somit Kosten einsparen.

Der Schaumstoff der Schaumstoffdichtung 120 kann beispielsweise einem Baustoff der Klasse B1 oder B2 gemäß DIN 4102:1998 entsprechen. Weiterhin kann der Schaumstoff die Eigenschaft aufweisen, unter thermischer Einwirkung aufzuschäumen. Der Schaumstoff kann gemäß einiger Ausführungsformen zusätzlich oder alternativ einen Widerstand gegenüber Flammen aufweisen. Insbesondere bei einem Brandfall kann unter der resultierenden thermischen Einwirkung ein Aufschäumen des Schaumstoffs verursacht werden derart, dass alle eventuell noch vorhandene Hohlräume innerhalb der Buchse 110 geschlossen sind und ein Flammendurchschlag von der ersten Seite der Trennwand 201 auf die zweite Seite der Trennwand 202, oder umgekehrt, effektiv verhindert wird.

Durch die Buchse 110 und die Schaumstoffdichtung 120 kann ein Kabel 300 und/oder ein Kabelbund von der ersten Seite 201 der Trennwand 200 auf die zweite Seite 202 der Trennwand 200 geführt werden. Gemäß einiger Ausführungsformen wird das Kabel 300 und/oder der Kabelbund durch die bereits montierte flammendichte Kabeldurchführung 100 geführt. Gemäß einiger alternativer oder zusätzlicher Ausführungsformen wird das Kabel 300 und/oder der Kabelbund gemeinsam mit der Schaumstoffdichtung 120 durch die Durchgangsöffnung der bereits in die Trennwand 200 eingesetzten Buchse 110 geführt.

In Abhängigkeit von einem Gesamtdurchmesser des Kabels 300 und/oder des Kabelbundes wird kein oder mindestens ein Schaumstoffring 121, 122, 123 entfernt, wenn das Kabel 300 und/oder das Kabelbund durch die Öffnung der Buchse 110 geführt wird. Gemäß einiger Ausführungsformen kann mindestens ein Schaumstoffring 121, 122, 123 bei einer nachträglichen Erweiterung mit mindestens einem weiteren Kabel und/oder Kabelbunden nachträglich entfernt werden. Dadurch wird ein Anpassen des lichten Innendurchmessers der flammendichten Kabeldurchführung 100 ermöglicht. Insbesondere kann ein solches Anpassen des lichten Innendurchmessers auch nachträglich, d.h. nach einer ersten Montage der flammendichten Kabeldurchführung 100 in der Trennwand 200, möglich sein.

Auf der ersten Seite 201 der Trennwand ist in Figur 1 weiterhin ein Kabelschutzschlauch 130 dargestellt, der einen Schlauch 131 und einen Befestigungsring 132 aufweisen kann. Der Befestigungsring 132 kann mit dem Schlauch 131 verbunden sein und kann weiterhin eine lösbare Verbindung zwischen dem Schlauch 131 und der Buchse 110 und/oder der Trennwand 200 ermöglichen. Der Schlauch 131 kann derart ausgeführt sein, dass der Schlauch 131 die Buchse 110 und somit auch das Kabel 300 umschließt. Das Kabel 300 kann beispielsweise durch den Schlauch 131 lose weitergeführt werden.

Mit Bezug zu Figur 2 wird eine weitere Ausführungsform einer flammendichten Kabeldurchführung 400 beschrieben. Die Kabeldurchführung 400 weist eine Buchse 410 mit einer Durchgangsöffnung 413, beispielsweise in Form einer Bohrung auf. Die Buchse 410 durchsetzt eine Öffnung, z.B. Bohrung, einer Trennwand 200. Am Innenumfang der Durchgangsöffnung 413 ist eine nach Innen vorspringende Schulter zur Bildung eines Anschlag 412 (Innenanschlag oder Innenvorsprung) ausgebildet. Dieser Innenanschlag 412 oder Innenvorsprung 412 dient als Stopp für die Schaumstoffdichtung 420, wenn diese in die Durchgangsöffnung 413 eingeführt wird.

In der in Figur 2 gezeigten Ausführungsform ist der Innendurchmesser der Durchgangsöffnung 413 ab dem Innenanschlag 412 (Schulter) durchgängig kleiner als vor dem Innenanschlag 412. Alternativ kann der Innendurchmesser beidseitig des Innenanschlags 412 auch gleich sein. In diesem Fall ist der Innenaschlag 412 nicht in Form einer Schulter sondern in Form eines Ringes oder einer Wulst ausgebildet.

Die Schaumstoffdichtung 420 weist mehrere konzentrisch zueinander angeordnete Schaumstoffringe 421, 422, 423 auf. Es sind mindestens zwei Schaumstoffringe 421, 422, 423, bevorzugt mindestens drei Schaumstoffringe 421, 422, 423 oder sogar mindestens vier Schaumstoffringe 421, 422, 423 vorgesehen.

Die Buchse 410 weist an ihrem Außenumfang einen nach außen weisenden Absatz 411 (Außenabsatz oder Außenvorsprung) auf, der ebenfalls in Form einer Schulter, wie in Figur 2 gezeigt, oder in Form eines sich nach außen erstreckenden Vorsprungs oder einer nach außen erstreckenden Wulst (nicht gezeigt) ausgeführt sein kann. Der Außenumfang der Buchse 410 kann beidseitig des Außenabsatzes bzw. Außenvorsprungs 411 einen unterschiedlichen Außendurchmesser aufweisen. In Figur 2 hat der Bereich links neben dem Außenabsatz 411 einen kleineren Außendurchmesser. Außerdem ist dieser Bereich mit einem Außengewinde 414 versehen. Die Buchse 410 kann mit dem Bereich mit kleinerem Außendurchmesser durch die Durchgangsöffnung der Trennwand 200 gesteckt werden und dann durch eine Mutter, oder eine andere Sicherungseinrichtung, gesichert werden. Mittels des Absatzes 411 wird die Lage der Buchse 410 relativ zur Trennwand 200 definiert.

Zur Sicherung des Kabels (nicht gezeigt in Figur 2) kann ein weiter oben beschriebener Kabelschutzschlauch 130 vorgesehen sein. Es ist möglich, lediglich auf einer der beiden Seiten der Buchse 410 einen Kabelschutzschlauch vorzusehen, oder auch auf beiden. Um die Verwendung von unterschiedlich großen Kabelschutzschläuchen zu vermeiden, kann die Buchse auf beiden Ende einen gleichen Außendurchmesser aufweisen. In diesem Fall ist der Außenabsatz 411 in Form eines nach außen weisenden Vorsprungs oder Wulst ausgebildet.

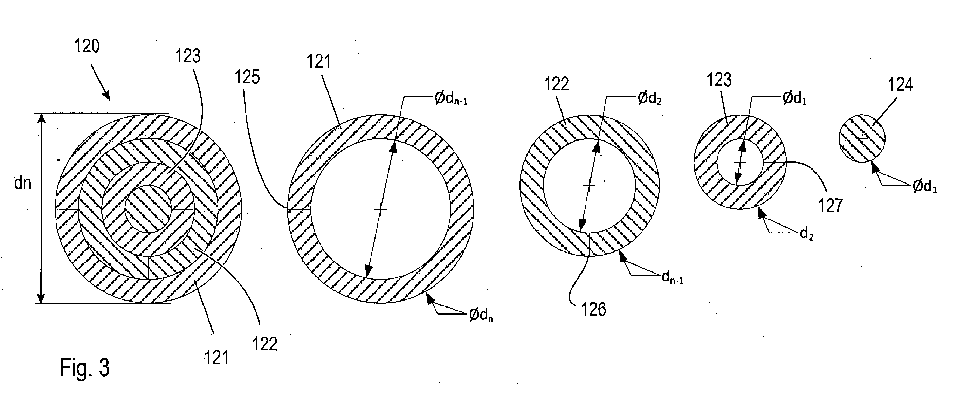

In Figur 3 ist eine Schaumstoffdichtung 120 mit Schaumstoffringen 121, 122, 123 und einem Schaumstoffkreis 124 gemäß einiger Ausführungsformen in einer Frontansicht dargestellt. Gemäß einigen Ausführungsformen kann die Schaumstoffdichtung 120 drei Schaumstoffringe 121, 122, 123 und einen Schaumstoffzylinder 124 umfassen, die beispielsweise aus einer Schaumstoffplatte einer geeigneten Dicke, z.B. via Wasserstrahlschneiden, herausgetrennt werden können. Die Dicke der Schaumstoffplatte entspricht beispielsweise in etwa der Länge der Buchse. Die Schaumstoffringe 121, 122, 123 können jeweils einen in Umfangsrichtung zueinander versetzt angeordneten Längsschlitz 125, 126, 127 aufweisen, sowie einen Innendurchmesser und einen Außendurchmesser haben. Der Innendurchmesser des innersten Schaumstoffringes 123 entspricht bei einigen Ausführungsformen dem Durchmesser des Schaumstoffzylinders 124. Der Innendurchmesser des nächst weiter außen gelegenen Schaumstoffringes 122, 123 kann jeweils dem Außendurchmesser des nächst weiter innen gelegenen Schaumstoffringes 121, 122 entsprechen. Alle Schaumstoffringe 121, 122, 123 sowie der Schaumstoffzylinder 124 können aus der gleichen Schaumstoffplatte geschnitten werden.

Die Schaumstoffdichtung mit ihren Schaumstoffringen 121, 122, 123 kann beispielsweise ein Polyurethanschaustoff sein, insbesondere ein im Brandfall aufschäumender Polyurethanschaum. Ein geeignetes Material ist beispielsweise Flammadur^{®} F500, bei dem es sich um einen im Brandfall aufschäumenden Polyurethanschaum handelt, der die Baustoffklasse B2 gemäß DIN 4102:1998 erfüllt. Der Polyurethanschaum kann aus zwei Komponenten Polyurethanharz mit Füllstoffkomponenten bestehen.

Wenngleich hierin spezifische Ausführungsformen dargestellt und beschrieben worden sind, liegt es im Rahmen der vorliegenden Erfindung, die gezeigten Ausführungsformen geeignet zu modifizieren, ohne vom Schutzbereich der vorliegenden Erfindung abzuweichen. Die nachfolgenden Ansprüche stellen einen ersten, nicht bindenden Versuch dar, die Erfindung allgemein zu definieren.

## Patentansprüche

1. Flammendichte Kabeldurchführung (100, 400), aufweisend:
eine Buchse (110, 410) mit einer Durchgangsöffnung (113, 413) zum Führen von mindestens einem Kabel (300) durch eine Trennwand (200), und
eine Schaumstoffdichtung (120, 420) aus einem Schaumstoff zum Einsetzen in die Durchgangsöffnung (113, 413) der Buchse (110, 410) und zum Umschließen des mindestens einen Kabels (300), wobei die Schaumstoffdichtung (120, 420) mindestens zwei konzentrisch angeordnete und voneinander zum stufenweisen Anpassen des lichten Innendurchmessers der Schaumstoffdichtung (120, 420) lösbare Schaumstoffringe (121, 122, 123, 421, 422, 423) aufweist, und
wobei der Schaumstoff der Baustoffklasse B1 oder B2 gemäß DIN 4102:1998 entspricht und unter thermischer Einwirkung, insbesondere bei einem Brandfall, aufschäumt.

2. Flammendichte Kabeldurchführung nach Anspruch 1, wobei die Durchgangsöffnung (113, 413) zumindest in einem Abschnitt einen Innendurchmesser ID aufweist und der äußerste Schaumstoffring (121, 421) einen Außendurchmesser dn aufweist, der größer ist als der Innendurchmesser ID, sodass der äußerste Schaumstoffring (121, 421) unter Kompression in die Durchgangsöffnung (113, 413) einsetzbar ist.

3. Flammendichte Kabeldurchführung nach Anspruch 1 oder 2, weiterhin aufweisend einen mit einem Stirnende der Buchse (110, 410) verbindbaren Kabelschutzschlauch (130), um das Kabel (300) von der Buchse (110, 410) lose weiterzuführen.

4. Flammendichte Kabeldurchführung nach Anspruch 3, wobei der Kabelschutzschlauch (130) einen Schlauch (131) und einen Befestigungsring (132) aufweist, der mit dem Schlauch (131) verbunden ist und der zum lösbaren Verbinden des Kabelschutzschlauches (130) mit der Buchse (110, 410) dient.

5. Flammendichte Kabeldurchführung nach einem der vorherigen Ansprüche, wobei der Schaumstoff der Schaumstoffdichtung ein Polyurethanschaumstoff ist.

6. Flammendichte Kabeldurchführung nach einem der vorherigen Ansprüche, wobei die Schaumstoffringe (121, 122, 123) jeweils einen Längsschlitz (125, 126, 127) aufweisen, entlang dessen der jeweilige Schaumstoffring (121, 122, 123) auftrennbar ist, um das Kabel (300) einzulegen.

7. Flammendichte Kabeldurchführung nach Anspruch 6, wobei die Längsschlitze (125, 126, 127) der Schaumstoffringe (121, 122, 123) in einer Umfangsrichtung versetzt zu einander angeordnet sind.

8. Flammendichte Kabeldurchführung nach Anspruch 6 oder 7, wobei die Schaumstoffringe (121, 122, 123) untereinander und/oder der äußerste Schaumstoffring (121) mit der Buchse (110) an der Durchgangsöffnung (113, 413) verklebt sind/ist.

9. Flammendichte Kabeldurchführung nach einem der vorherigen Ansprüche, wobei die Schaumstoffringe (121, 122, 123, 421, 422, 423) einzeln aus der Buchse (110, 410) herausnehmbar sind.

10. Container mit einer Trennwand (200) zum Abtrennen eines Innenbereichs des Containers von einem Außenbereich, wobei die Trennwand (200) eine Durchgangsöffnung (203) mit einer darin eingesetzten flammendichten Kabeldurchführung (100, 400) nach einem der vorhergehenden Ansprüche aufweist, wobei mindestens ein Kabel (300) vom Außenbereich durch die flammendichte Kabeldurchführung (100, 400) in den Innenbereich des Containers geführt ist, wobei die Buchse (110, 410) der flammendichten Kabeldurchführung (100, 400) die Trennwand (200) durchdringt und das mindestens eine Kabel (300) in der Durchgangsöffnung (113, 413) der Buchse (110) von der Schaumstoffdichtung (120, 420) umschlossen ist und die Schaumstoffdichtung (120, 420) die Durchgangsöffnung (113, 413) verschließt, wobei die Schaumstoffdichtung (120, 420) aus der Durchgangsöffnung (113, 413) zerstörungsfrei entfernbar ist.

11. Schienenfahrzeug mit mindestens einem Kabel (300), das durch eine Trennwand (200) eines Einbauraums oder eines Containers führt, und mit einer flammendichten Kabeldurchführung (100, 400) nach einem der Ansprüche 1 bis 9, wobei die Buchse (110, 410) die Trennwand (200) durchdringt und das mindestens eine Kabel (300) in der Durchgangsöffnung (113, 413) der Buchse (110) von der Schaumstoffdichtung (120, 420) umschlossen ist und die Schaumstoffdichtung (120, 420) die Durchgangsöffnung (113, 413) verschließt, wobei die Schaumstoffdichtung (120, 420) aus der Durchgangsöffnung (113, 413) zerstörungsfrei entfernbar ist.

12. Verwendung einer Schaumstoffdichtung (120, 420) aus einem Schaumstoff, insbesondere für eine flammendichte Kabeldurchführung (100, 400) nach einem der Ansprüche 1 bis 9, wobei die Schaumstoffdichtung (120, 420) mindestens zwei konzentrisch angeordnete und voneinander zum stufenweisen Anpassen des lichten Innendurchmessers der Schaumstoffdichtung (120, 420) lösbare Schaumstoffringe (121, 122, 123, 421, 422, 423) aufweist, und wobei der Schaumstoff der Baustoffklasse B1 oder B2 gemäß DIN 4102:1998 entspricht, und unter thermischer Einwirkung, insbesondere bei einem Brandfall, aufschäumt, zum Einsetzen in eine Durchgangsöffnung (113, 413) einer Buchse (110, 410) und zum Umschließen und Führen mindestens eines Kabels (300) durch eine Trennwand (200) derart, dass eine flammendichte Kabeldurchführung (100, 400)ermöglicht wird.
